# EUROPEAN PATENT SPECIFICATION

(11) **EP 3 495 191 B1**
(45) Date of publication and mention of the grant of the patent: **03.03.2021**
(21) Application number: 17205873.7
(22) Date of filing: 07.12.2017
(51) Int. Cl.: B60L 53/12, B60L 58/27

(54) **HEATING DEVICE FOR A TRACTION BATTERY OF A VEHICLE, AND VEHICLE HAVING THE SAME**
HEIZVORRICHTUNG FÜR EINE TRAKTIONSBATTERIE EINES FAHRZEUGS, UND FAHRZEUG MIT DERSELBEN
DISPOSITIF DE CHAUFFAGE POUR UNE BATTERIE DE TRACTION D'UN VÉHICULE, ET VÉHICULE AYANT CELUI-CI

(43) Date of publication of application: 12.06.2019
(73) Proprietor: Bayerische Motoren Werke Aktiengesellschaft, 80809 München (DE)
(72) Inventor: Lund, Isaac, Salinas, CA California 93907 (US); Teichert, Olaf, 2314XN Leiden (NL)

(56) References cited:
- WO-A2-2012/031721
- JP-A- 2012 204 259
- US-A- 4 081 737
- US-A1- 2015 061 593
- US-A1- 2015 197 155
- US-A1- 2017 259 806

## Description

### Field of the invention

The present invention relates to a heating device for a traction battery of a vehicle, and a vehicle having such a heating device.

### State of the art

During the wireless charging of the traction battery, the battery requires a thermal management, in order to maintain the battery within a temperature range which is suitable for the battery to be charged efficiently. The current state of the art is to utilize an external heating element (resistive filament) in order to heat the battery while being wirelessly charged. The power of the resistive filament is siphoned from the power to charge the battery, and thus the charging power is reduced while the battery is being pre-heated.

WO 2012/031721 A2 describes a heating device for a traction battery of a vehicle, comprising an induction coil for wireless charging of the traction battery, and heat transfer means for transferring heat from the induction coil to the traction battery for heating the traction battery, wherein the heat transfer means cover at least 10% of the outer surface of the traction battery, wherein the heat transfer means is a heating circuit adapted to transfer heat from the induction coil to the traction battery by means of a circulated fluid. US 2015/0197155 A1 discloses in Fig. 5A a multi-turn coil which is embedded in ferrite material which upper side is provided with a conductive layer. A battery space is surrounding the ferrite material. US 2015/0061593 A1 discloses an inductive coil being surrounded by ferrite material.

### Summary of the invention

The object of the invention is to provide a heating device having improved energy efficiency.

This object is achieved with a device according to the claim 1. Advantageous further developments are subject of the dependent claims.

According to an embodiment of the invention a heating device for a traction battery of a vehicle is provided. The heating device comprises an induction coil for wireless charging of the traction battery; a ferrite shield surrounding the induction coil, and heat transfer means being a heating circuit adapted to transfer heat from the ferrite shield to the traction battery by means of a circulated fluid, the heat transfer means further being attached to the ferrite shield and being adapted to cover at least 10% of the outer surface of the traction battery.

Wireless charging of a traction battery of an electric vehicle occurs through the electromagnetic resonance between two induction coils, a transmitting coil (ground pad), and a receiving coil (vehicle pad). The electromagnetic resonance works primarily through impedance matching between the two induction coils in wireless power transference. The impedance between the two coils is influenced by any magnetic or conductive material that may be within or near the transference environment, thus to decrease the influence of stray or secondary fields on the induction of stray metallic objects, the ferrite shield (i.e. an iron containing ceramic) is implemented around the transmitting and receiving coil. The ferrite shields are used to suppress any external heating outside of the wireless power transmission area. These ferrite shields are electric field suppressors by contained microfields contained within the ceramic. Since these microfields involve the flipping of charges from the ferromagentic ceramic, the ceramic goes through a heating process during field suppression. The above mentioned embodiment provides the benefit that some of this heat is drained off transferred through the heat transfer means to the traction battery and used for heating the traction battery. This on the other hand lowers the energy demand for heating the traction battery during charging and provides a better low temperature battery performance. The amount of heating that needs to be completed by a resistive filament is reduced allowing for more power to be diverted to battery charging while still maintaining heating through taking heat from the ferrite shield.

According to an example not covered by the invention the heat transfer means is a thermally conductive material.

According to an example not covered by the invention the heat transfer means is a non-magnetic thermally conductive material.

According to an example not covered by the invention the thermally conductive material comprises at least one of the following: tin, bronze, aluminum, carbon.

According to an example not covered by the invention the thermally conductive material encapsulates at least 50% of the outer surface of the traction battery.

Further, the invention provides a vehicle comprising a traction battery and a heating device according to the preceding embodiment.

Other objects, advantages and novel features of the present invention will become apparent from the following detailed description of one or more preferred embodiments when considered in conjunction with the accompanying drawings.

### Brief description of the drawings

Fig. 1 illustrates a ground pad and a vehicle pad for wireless charging;
Fig. 2 schematically illustrates the heating device according an example not covered by the invention and
Fig. 3 schematically illustrates the heating device according to an embodiment of the invention.

### Detailed description of a preferred embodiment

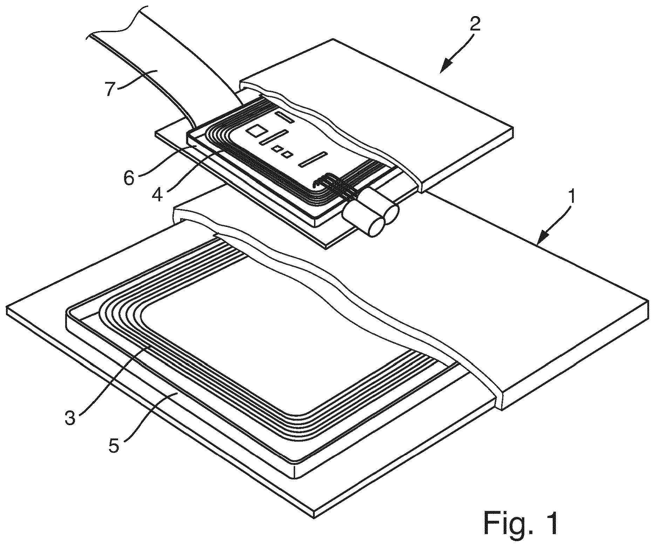

Figure 1 illustrates a ground pad 1 and a vehicle pad 2, both of which comprise an induction coil 3, 4. Wireless charging of a traction battery of an electric vehicle is realized by means of electromagnetic resonance between these induction coils, wherein the induction coil 3 of the ground pad 1 serves as a transmitting coil and the induction coil 4 of the vehicle pad 2 serves as a receiving coil. The coils 3, 4 are made of Litz wires which are wound around a substantially vertical axis, e.g. in a square shape. Each of the induction coil 3, 4 is surrounded by a ferrite shield 5, 6 for decreasing the influence of stray or secondary fields on the induction of stray metallic objects, as described before. The ferrite shields 5, 6 are for example made of iron containing ceramic. The ferrite shields 5, 6 could also be made of different magnetic oxides such as chrome oxide, ruthenium oxide, or other magnetically permeable oxides. In particular, the ferrite shields 5, 6 extend in a closed loop around the radial outer side of the induction coils 3, 4. The ferrite shields 3, 4 are electric field suppressors by contained microfields contained within the ceramic. Since these microfields involve the flipping of charges from the ferromagentic ceramic, the ceramic goes through a heating process during field suppression. In order to drained off some of the heat and to transfer it to the traction battery for heating the traction battery, heat transfer means 7 are attached to the ferrite shield 6 of the vehicle pad 2. This attachment can be realized in particular by welding or soldering.

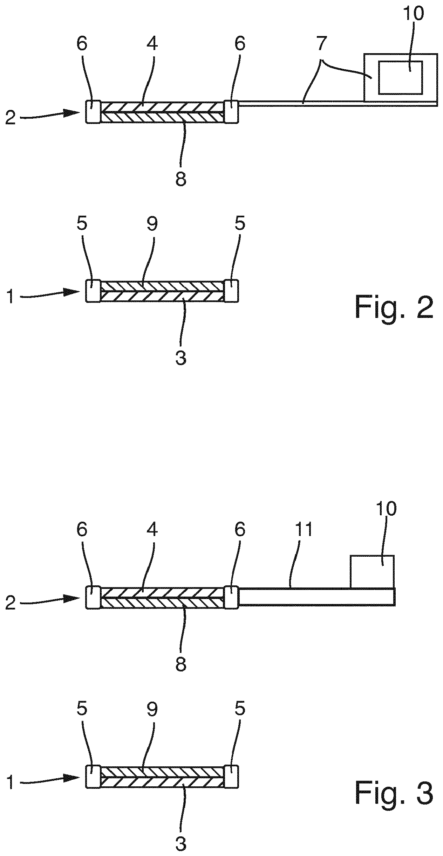

Fig. 2 schematically illustrates the heating device according to an example not covered by the invention. The Figure schematically shows the elements described with reference to Fig. 1, namely the induction coils 3, 4 of the ground pad 1 and the vehicle pad 2, which are surrounded by the ferrite shields 5, 6. Additionally, an encapsulant 8 is provided which is a cover for covering a side of the induction coil 4 facing towards the ground pad 1. Similarly, the ground pad 1 has an encapsulant 9 which is a cover for covering a side of the induction coil 3 facing towards the vehicle pad 2. The encapsulants 8 and 9 are for example made of a plastic material.

In this example the heat transfer means 7 is a non-magnetic thermally conductive material which is attached to the ferrite shield 6 of the vehicle pad 2 and continuously extends to a traction battery 10, where it is attached to the traction battery 10, such that it covers at least 10% of an outer surface of the traction battery. In particular, the non-magnetic thermally conductive material covers at least one side of the traction battery 10. In particular, the non-magnetic thermally conductive material covers at least 20% of the outer surface of the traction battery. In particular, the non-magnetic thermally conductive material covers at least 50% of the outer surface of the traction battery. In particular, the non-magnetic thermally conductive material surrounds the entire outer surface of the traction battery on every side of it.

The non-magnetic thermally conductive material is preferably a metallic nonmagnetic material comprising at least one of the following: tin, bronze, aluminum, carbon, zinc, lead, titanium, gold, silver, platinum. In particular, the non-magnetic thermally conductive material is made of at least one of the just mentioned materials or is made of one of the just mentioned materials. Also silicon-nitride coated copper would be a suitable material.

Fig. 3 schematically illustrates the heating device according to an embodiment of the invention. With respect to elements having the same reference numeral than those in Figs. 1 and 2, it is referred to the above description in connection with these Figures.
In this embodiment, the heat transfer means 11 is a heating circuit adapted to transfer heat from the ferrite shield to the traction battery by means of a circulated fluid. On one side, the heating circuit is attached to the ferrite shield 6, and on the other side, the heating circuit is attached to the traction battery 10. The heating circuit preferably contains a pump (not shown) for circulating the fluid in the heating circuit. The heating circuit is attached to the traction battery and covers at least 10% of an outer surface of the traction battery, for example by means of a heat exchanger. The heat transfer means 11 could also cover at least 50% of the outer surface of the traction battery, when being guided around the surface of the traction battery.

The foregoing disclosure has been set forth merely to illustrate the invention and is not intended to be limiting. Since modifications of the disclosed embodiments may occur to persons skilled in the art, the invention should be construed to include everything within the scope of the appended claims and equivalents thereof.

## Claims

1. Heating device for a traction battery (10) of a vehicle, comprising:
an induction coil (4) for wireless charging of the traction battery (10);
a ferrite shield (6) surrounding the induction coil (4), and
heat transfer means (11) being a heating circuit adapted to transfer heat from the ferrite shield (6) to the traction battery (10) by means of a circulated fluid, the heat transfer means (11) further being attached to the ferrite shield (6) and being adapted to cover at least 10% of the outer surface of the traction battery (10).

2. Vehicle comprising a traction battery (10) and a heating device according to claim 1.

## Patentansprüche

1. Heizeinrichtung für eine Traktionsbatterie (10) eines Fahrzeugs, umfassend:
eine Induktionsspule (4) zum drahtlosen Laden der Traktionsbatterie (10);
einen Ferritschild (6), der die Induktionsspule (4) umgibt; und
wobei Wärmetransfermittel (11) ein Heizkreis sind, ausgelegt zum Übertragen von Wärme von dem Ferritschild (6) zu der Traktionsbatterie (10) mit Hilfe eines umgewälzten Fluids, wobei die Wärmetransfermittel (11) weiter an dem Ferritschild (6) angebracht sind und ausgelegt sind zum Bedecken von mindestens 10% der äußeren Oberfläche der Traktionsbatterie (10).

2. Fahrzeug umfassend eine Traktionsbatterie (10) und eine Heizeinrichtung nach Anspruch 1.

## Revendications

1. Dispositif de chauffage pour une batterie de traction (10) d'un véhicule, comprenant :
une bobine d'induction (4) pour un chargement sans fil de la batterie de traction (10) ;
un blindage en ferrite (6) entourant la bobine d'induction (4), et
un moyen de transfert thermique (11) constitué par un circuit de chauffage prévu pour transférer de la chaleur du blindage en ferrite (6) à la batterie de traction (10) par le biais d'une circulation de fluide, le moyen de transfert thermique (11) étant en outre attaché au blindage en ferrite (6) et étant prévu pour couvrir au moins 10 % de la surface extérieure de la batterie de traction (10).

2. Véhicule comprenant une batterie de traction (10) et un dispositif de chauffage selon la revendication 1.
